# EUROPEAN PATENT APPLICATION

(11) **EP 4 783 523 A1**
(43) Date of publication of application: **29.07.2026**
(21) Application number: 26151770.0
(22) Date of filing: 14.01.2026
(51) Int. Cl.: H04L 12/28, H04W 84/18

(54) **DISTRIBUTED LOGIC OPERATIONS FOR BUILDING AUTOMATION SYSTEMS**

(30) Priority: 28.01.2025 US 202519039314
(71) Applicant: Honeywell International Inc., Charlotte, NC 28202 (US)
(72) Inventor: DUGE, Sudeep Jayakumar, Charlotte, 28202 (US); SUBBAIAH, Ramesh Molakalolu, Charlotte, 28202 (US); TRIPATHI, Sameer, Charlotte, 28202 (US)
(74) Representative: Haseltine Lake Kempner LLP

(57) **Abstract**

Devices, systems, and methods for distributed logic operations for building automation systems are described herein. In some examples, one or more embodiments include a building automation system, comprising a mobile device and a plurality of system devices installed in a building and configured to operate according to a set of logic operations, wherein the plurality of system devices includes a plurality of input devices and a plurality of output devices, wherein the plurality of system devices form a wireless mesh network, and wherein each of the plurality of system devices stores the set of logic operations.

## Description

### Technical Field

The present disclosure relates to devices, systems, and methods for distributed logic operations for building automation systems.

### Background

Buildings, such as homes, apartments, commercial facilities, office buildings, hospitals, campuses (e.g., including buildings and outdoor spaces), and the like, may have a building automation system that can be triggered during an event, such as an emergency situation (e.g., a fire). A building automation system can function to warn occupants to evacuate, mitigate against the emergency situation, and/or control elements within a building during the emergency situation (e.g., doors, heating, ventilation, and air conditioning (HVAC), smoke control systems, etc.). An event system may include an alarm system having a number of system devices (e.g., sensors, sounders, pull stations, etc.) located throughout the building (e.g., on different floors and/or in different rooms of the building) that can perform an action when an event (e.g., a hazard event, a fault event, etc.) is occurring in the building. In an example of an event, the number of system devices may provide a notification of the event to the occupants of the building via alarms and/or other mechanisms.

### Brief Description of the Drawings

Figure 1 is an example of a system for distributed logic operations for building automation systems, in accordance with one or more embodiments of the present disclosure.
Figure 2A is another example of a system for distributed logic operations for building automation systems, in accordance with one or more embodiments of the present disclosure.
Figure 2B illustrates the system of Figure 2A following a dropping of a system device, in accordance with one or more embodiments of the present disclosure.
Figure 3 is an example of a computing device for distributed logic operations for building automation systems, in accordance with one or more embodiments of the present disclosure.

### Detailed Description

Devices, systems, and methods for distributed logic operations for building automation systems are described herein. In some examples, one or more embodiments include a building automation system, comprising a mobile device and a plurality of system devices installed in a building and configured to operate according to a set of logic operations, wherein the plurality of system devices includes a plurality of input devices and a plurality of output devices, wherein the plurality of system devices form a wireless mesh network, and wherein each of the plurality of system devices stores the set of logic operations.

A building can utilize a building automation system in order to warn occupants of the building of an emergency event, such as a fire. A building automation system can be a system of devices that operate to collect information about a building and provide the collected information for analysis. A building automation system can also take actions based on the collected information, such as providing an audible and/or visible warning in an emergency event and/or controlling occupancy-based devices (e.g., lights). For example, the building automation system can utilize system devices to warn occupants of an emergency event occurring in the space, such as a fire. As used herein, the term "system device" refers to a device that can receive an input relating to an event and/or generate an output relating to an event. Such system devices can be a part of the building automation system of a space in a building/in the building at large and can include devices such as fire sensors, smoke detectors, heat detectors, carbon monoxide (CO) detectors, or combinations of these; air quality sensors; interfaces; manual call points (MCPs); pull stations; input/output modules; aspirating units; and/or audio/visual devices (e.g., speakers, sounders, flashers, buzzers, microphones, cameras, video displays, video screens, etc.), relay output modules, among other types of system devices.

The behavior of a building automation system (e.g., the system devices of the building automation system) can be governed by a set of logic operations. As referred to herein, logic operations include cause and effect (C&E) rules, multi-dependency logics, delayed operations, and/or scheduled operations, for instance, among others. Individual system devices can be configured to operate according to a subset of logic operations (e.g., those logic operations that pertain to that individual system device). The cumulative total of all the subsets of logic operations across all the system devices of a building automation system may be referred to herein as a "set" of logic operations.

Logic operations play a vital role in building automation systems. Logic operations provide the process of mapping, initiating sensors, and notification appliances to interoperate to identify particular events and provide correspondingly appropriate particular notifications to users of the building automation system, occupants of the building, system monitoring personnel, emergency personnel, building ownership, and/or system maintenance personnel based on the particular type of event identified. Activating appropriate audible and/or visual notifications, initiating voice alarm notifications, playing evacuation and/or alert messages on a user's computing device at a right time and/or in the right places are important factors to life safety at a building.

According to a given logic operation, a particular input (or set of inputs) is expected to lead to a particular output (or set of outputs). Logic operations include commands which can be executed responsive to a cause. For example, the cause can be a report of a fire by an input device (e.g., a smoke detector) and the effect can be broadcasting an alert (e.g., an alarm) by an output device.

Logic operations can be triggered by inputs. Inputs triggering logic operations include events of the system, such as emergency events marked by alarms (e.g., fire alarms, security alarms, technical alarms, auxiliary alarms, pre-alarms, etc.) and/or faults (e.g., faults detected and triggers by the system). Inputs triggering logic operations include output activations. Stated differently, an event raised due to an output being operated can in turn be used as input into logic operation. Output actions (sometimes referred to herein simply as "outputs") include notifications (e.g., sounders, strobes, hooters, speakers, flashers, etc.), protection and extinguishing actions, control actions (e.g., fire door, elevator, HVAC, smoke control, etc.).

Logic operations may include identifications of a plurality of zones within a building. A zone, as referred to herein, is an indivisible unit of space (e.g., measured in square feet, square meters, etc.) of a building that is protected by a building automation system. Zones, depending on their usages, can contain various resources, people, property, and/or infrastructure. Logic operations may dictate that a given type of input in a first zone leads to a different output than that same type of input when associated with a different zone.

Previous approaches to building automation systems may have a central operational logic (e.g., C&E) engine that may run in a master controller (e.g., fire panel or the like). This controller can poll system devices including detectors, door contacts, passive infrared (PIR) sensors, sounders, and/or others. The controller can make determinations and/or decisions and generate alarm events based on the received input data. Additionally, such a controller can control the activation of outputs per configured operational logic.

However, previous approaches using a master controller have shortcomings. A failure of the controller, for instance, leads to failure or compromise of the whole system. A failure of a system device in a mesh network that includes such a controller can cause a failure to communicate throughout the network and, particularly, between one or more devices and the controller. As the system devices cannot determine actions on their own (e.g., without the controller), the operational logic may become inoperable for the affected part of the network.

In addition, previous approaches using a master controller carry with them the costs of installing such a controller, including its wiring, and the latency associated with propagating communications from system devices to the controller (and back again).

Embodiments of the present disclosure can eliminate the need for a master controller in building automation systems altogether. As a result, embodiments herein benefit from redundancies that reduce (e.g., minimize) the effects of device failure, save costs, and accelerate communications in systems where speed can mean the difference between life and death.

For example, embodiments of the present disclosure include a set of logic operations that is distributed throughout the devices of the system. Stated differently, instead of a set of logic operations that is stored and orchestrated by a master controller, each system device in accordance with embodiments herein can store the set of logic operations (e.g., in local memory). The system devices can form a wireless mesh network (e.g., radio frequency (RF) mesh network, Bluetooth Low Energy (BLE) mesh network, etc.), and all events can be broadcast to all other devices in the system. Each input device can be responsible for activation of its configured zone. Each output device can store a list of zonal activation actions per each configured zone. In some embodiments, for instance, when an input device goes active (e.g., enters a fire state) it transmits a fire active event with its configured zone. Then, when an output device receives the fire active event with the zone information, the output device can refer to its local zonal action list for the active zone in the event and can act (e.g., sound, flash, buzz, etc.) accordingly.

Because no master controller is involved, the loss or failure of a system device does not destroy the operation of the system. If, for example, a device drops from the network, the remaining devices can re-form one or more new mesh networks. The new mesh network(s) can operate under a modified set of logic operations that take into account the fact that a device is missing. In an example, if a sounder, under a configured set of logic operations, requires inputs from two input devices to sound, previous approaches may see that sounder remain silent if one of the input devices drops. In contrast, embodiments of the present disclosure can operate under a modified set of logic operations where only inputs from one of the input devices is sufficient for the sounder to sound.

In such cases, beyond modifying logic operations, embodiments herein can provide a notification to an interface of a mobile device about the loss of a system device from the network. Such a notification can include an indication of the modified logic operations now being executed. Such a notification can be provided via an application executing on the mobile device, for instance, which can communicate with the system devices and allow the general management of the system by a user without the need for a user interface on a master controller.

In the following detailed description, reference is made to the accompanying drawings that form a part hereof. The drawings show by way of illustration how one or more embodiments of the disclosure may be practiced.

These embodiments are described in sufficient detail to enable those of ordinary skill in the art to practice one or more embodiments of this disclosure. It is to be understood that other embodiments may be utilized and that process, electrical, and/or structural changes may be made without departing from the scope of the present disclosure.

As will be appreciated, elements shown in the various embodiments herein can be added, exchanged, combined, and/or eliminated so as to provide a number of additional embodiments of the present disclosure. The proportion and the relative scale of the elements provided in the figures are intended to illustrate the embodiments of the present disclosure and should not be taken in a limiting sense.

As used herein, "a", "an", or "a number of" something can refer to one or more such things, while "a plurality of" something can refer to more than one such things. For example, "a number of components" can refer to one or more components, while "a plurality of components" can refer to more than one component.

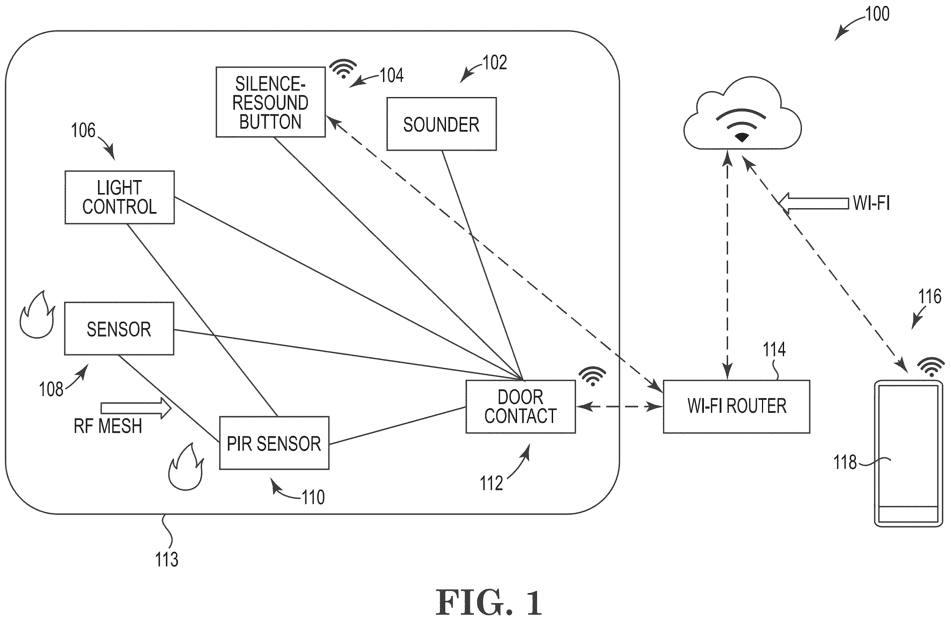

Figure 1 is an example of a system 100 for distributed logic operations for building automation systems, in accordance with one or more embodiments of the present disclosure. As illustrated in Figure 1, the example system 100 can include a plurality of system devices, including a sounder 102, an alarm silence actuator 104, a light control module, 106, a sensor (e.g., smoke detector) 108, a PIR sensor 110, and a door contact 112 (cumulatively referred to as "system devices 113"). The plurality of system devices 113 illustrated in Figure 1 are not to be taken in a limiting sense; embodiments of the present disclosure are not limited to the types and/or quantities of system devices illustrated in the examples provided herein.

The system devices 113 can be in communication with a mobile device 116. In some embodiments, the system devices 113 are in communication with the mobile device 116 via a wireless router 114, for instance, though embodiments of the present disclosure are not so limited. The mobile device 116 can include a user interface (e.g., display) 118. User interface 118 can be and/or include various display technologies such as, for example, liquid crystal display (LCD), light emitting diode (LED) display, cathode ray tube (CRT) display, etc., and can display videos, data, and/or information to one or more users. Mobile device 116 can include additional components such as one or more microphones, for instance, among others (not shown in Figure 1).

Each of the system devices 113 can include a processor and a memory, for instance (e.g., in a manner analogous to that discussed further below). Each of the system devices can store a set of logic operations. In some embodiments, the logic operations are included in a configuration file stored by the system devices 113.

As used herein, the term "system device" refers to a device that can send data regarding an event occurring in the device's coverage area (where it can sense an event occurring) and/or receive an input relating to an event. Such system devices can be a part of a building automation system of the building and can include devices such as fire sensors, smoke detectors, heat detectors, carbon monoxide (CO) detectors, other chemical detector(s), or combinations of these; interfaces; pull stations; input/output modules; aspirating units; and/or audio/visual devices, such as speakers, sounders, buzzers, microphones, cameras, video displays, video screens, and other detector devices, among other types of system devices.

Detectors can be various types of detectors (e.g., a smoke detector), and embodiments of the present disclosure are not limited to particular types of detectors. Similarly, sensors can be various types of sensors (e.g., a temperature sensor), and embodiments of the present disclosure are not limited to particular types of sensors. For example, a building can include a plurality of fire detectors, and/or sensors of various types, for instance, dispersed throughout the building.

A user can be authenticated and/or gain access to the mobile device 116 such that the user can visualize user interface 118. User interface 118 can display various interfaces that can be customized by the user, for instance. For example, user interface 118 can display a graphical representation of the building and/or the system devices 113. Such a graphical representation can include a floor plan (e.g., two or three-dimensional rendering) of a building.

The graphical representation can include depictions of entities in the building. In some embodiments, for instance, the locations of people can be depicted using display elements. In some embodiments, a fire, or other cause of an emergency can be depicted graphically with animations.

An event alarm signal can be generated in response to data from one or more system devices (e.g., sensor 108) indicating that an event (e.g., fire, emergency situation, etc.) may be occurring. As used herein, the term "event" may refer to any condition occurring within the building, such as a fire, smoke, or chemical sensor activation, an alarm trigger (pull station), or a breach of security.

The sensor 108 may be configured to transmit information about the emergency event to the other devices 113. This information, may include, for example, a unique identifier of the system device which detected the event, a zone in which the device is located (e.g., in which the event is taking place) a date and/or time of the event, a status of the event (e.g., resolved, unresolved), and/or an event type (e.g., smoke detected, communication fault).

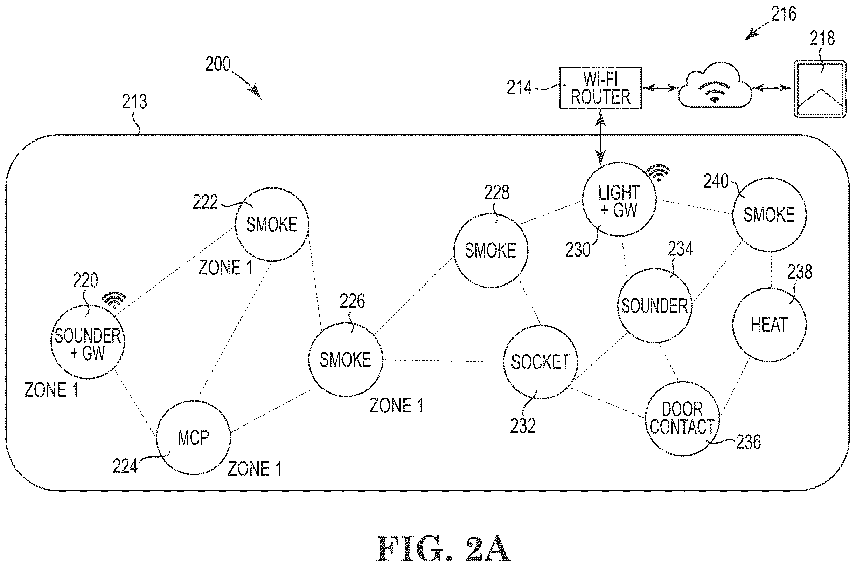

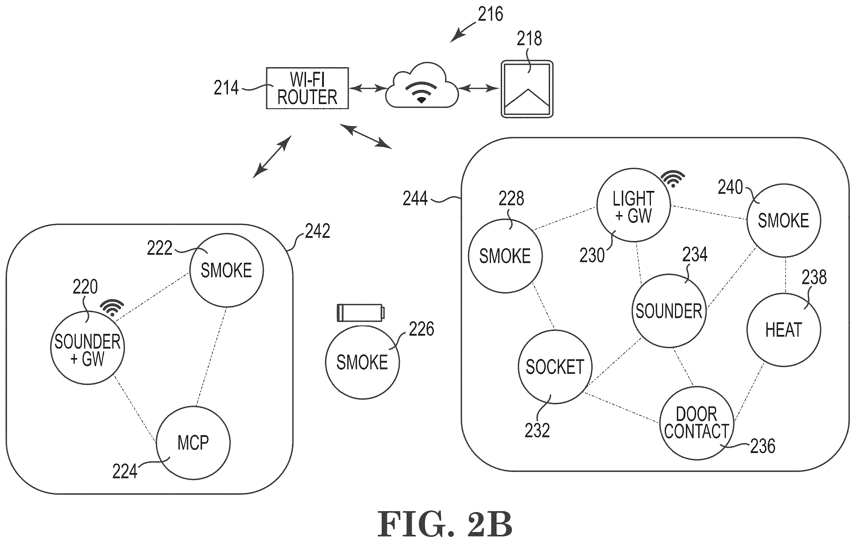

Figure 2A is another example of a system 200 for distributed logic operations for building automation systems, in accordance with one or more embodiments of the present disclosure. As illustrated in Figure 2, the example system 200 includes a sounder and gateway 220, a first smoke detector 222, a manual call point (MCP) 224, a second smoke detector 226, a third smoke detector 228, a light sensor and gateway 230, a socket 232, a sounder 234, a door contact 236, a heat sensor 238, and a fourth smoke detector 240 (cumulatively referred to as "system devices 213"). The system devices 213 form a wireless mesh network that can communicate with a mobile device 216 via a router 214, for instance.

Figure 2B illustrates the system of Figure 2A following a dropping of a system device, in accordance with one or more embodiments of the present disclosure. In the example illustrated in Figure 2B, the second smoke detector 226 has dropped from the network 213 because its battery has either expired or has been reduced beneath a threshold. Referring back to Figure 2A, the second smoke detector 226 formed a communication connection between the devices shown to its left (e.g., the sounder and gateway 220, the first smoke detector 222, and the MCP 224) and the devices to its right (e.g., the third smoke detector 228, the light sensor and gateway 230, the socket 232, the sounder 234, the door contact 236, the heat sensor 238, and the fourth smoke detector 240. Thus, when the second smoke detector 226 dropped communication between these two subsets of the devices 213 was lost.

However, in accordance with embodiments herein, each device can monitor its neighbors list and can determine when a device has dropped. The neighbors of the second smoke detector 226 include the first smoke detector 222, the MCP 224, the third smoke detector 228, and the socket 232. Then, as illustrated in Figure 2B, two new mesh networks can be formed. The first new mesh network 242 includes the sounder and gateway 220, the first smoke detector 222, and the MCP 224. The second new mesh network 244 includes the third smoke detector 228, the light sensor and gateway 230, the socket 232, the sounder 234, the door contact 236, the heat sensor 238, and the fourth smoke detector 240. Each of the first new mesh network 242 and the second new mesh network 244 can work independently and can take logic operation decisions independently.

To the extent that the dropped device 226 was involved in the set of logic operations, any logic operations associated with that device can be modified (e.g., by one or more of the system devices illustrated in Figure 2B). In an example referring back to Figure 2A, the set of logic operations dictated that the sounder and gateway 220 would sound responsive to a "double knock" of the first smoke detector 222 and the second smoke detector 226. Stated differently, if both the first smoke detector 222 and the second smoke detector 226 indicated a fire event within a threshold period of time, the sounder and gateway 220 would sound. Referring back to Figure 2B, the dropping of the second smoke detector 226 would keep the sounder and gateway 220 silent in the event of a fire under the originally configured set of logic operations because no inputs would be received from the second smoke detector 226. In accordance with embodiments herein, however, the set of logic operations can be modified. Under the modified set of logic operations, merely an indication of an event from the first smoke detector 222 will now be sufficient to sound the sounder and gateway 220. Additionally, a notification can be provided via the mobile device 216 of the dropping of the second smoke detector 226 and/or the modification of the set of logic operations.

In another example, following the determination of the dropping of the second smoke detector 226 and the formation of the new mesh networks, any dependencies that the device(s) of the second new mesh network 244 previously had, under the originally configured set of logic operations, on any of the devices they can no longer communicate with (e.g., the devices of the first new mesh network 242) can be removed from the set of logic operations. A notification can be provided via the mobile device 216 of the dropping of the second smoke detector 226 and/or the modification of the set of logic operations divorcing any reliance and/or dependencies between the two new mesh networks. As previously discussed, each of the first new mesh network 242 and the second new mesh network 244 can operate independently and can execute their own logic operations without requiring communication between the two networks.

More generally, if a device drops from a network (e.g., due to low battery or malfunction) its nearest neighbor(s) can sense its absence and broadcast this determination to any other devices with which they are in communication. Each device of the newly formed network(s) can record the node drop and update the mesh network. The newly-formed mesh network(s) can fall back or work independently and implement logic operations that are modified in light of the missing device. The modified logic operations can be preconfigured (e.g., by a user) for the various permutations of dropped devices. In some embodiments, the modified logic operations can be configured such that any inputs from dropped devices (or inputs from other devices that are blocked by the dropped devices) are no longer needed for logic operations to be performed within a network.

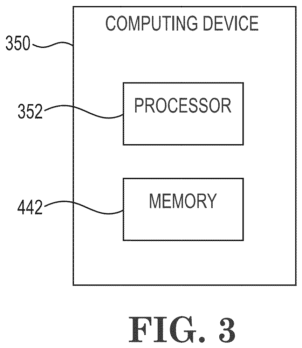

Figure 3 is an example of a computing device 350 for distributed logic operations for building automation systems, in accordance with one or more embodiments of the present disclosure. As illustrated in Figure 3, the computing device 350 can include a memory 354 and a processor 352, in accordance with the present disclosure.

The memory 354 can be any type of storage medium that can be accessed by the processor 352 to perform various examples of the present disclosure. For example, the memory 354 can be a non-transitory computer readable medium having computer readable instructions (e.g., executable instructions/computer program instructions) stored thereon that are executable by the processor 352 for distributed logic operations for building automation systems in accordance with the present disclosure.

The memory 354 can be volatile or nonvolatile memory. The memory 354 can also be removable (e.g., portable) memory, or non-removable (e.g., internal) memory. For example, the memory 354 can be random access memory (RAM) (e.g., dynamic random access memory (DRAM) and/or phase change random access memory (PCRAM)), read-only memory (ROM) (e.g., electrically erasable programmable read-only memory (EEPROM) and/or compact-disc read-only memory (CD-ROM)), flash memory, a laser disc, a digital versatile disc (DVD) or other optical storage, and/or a magnetic medium such as magnetic cassettes, tapes, or disks, among other types of memory.

Further, although memory 354 is illustrated as being located within computing device 402, embodiments of the present disclosure are not so limited. For example, memory 354 can also be located internal to another computing resource (e.g., enabling computer readable instructions to be downloaded over the Internet or another wired or wireless connection).

The processor 352 may be a central processing unit (CPU), a semiconductor-based microprocessor, and/or other hardware devices suitable for retrieval and execution of machine-readable instructions stored in the memory 354.

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the disclosure includes any other applications in which the above structures and methods are used. Therefore, the scope of various embodiments of the disclosure should be determined with reference to the appended claims, along with the full range of equivalents to which such claims are entitled.

In the foregoing Detailed Description, various features are grouped together in example embodiments illustrated in the figures for the purpose of streamlining the disclosure. This method of disclosure is not to be interpreted as reflecting an intention that the embodiments of the disclosure require more features than are expressly recited in each claim.

Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A building automation system (100, 200), comprising:
a mobile device (118, 218); and
a plurality of system devices (113, 213) installed in a building and configured to operate according to a set of logic operations, wherein the plurality of system devices includes:
a plurality of input devices; and
a plurality of output devices,
wherein the plurality of system devices form a wireless mesh network (213), and
wherein each of the plurality of system devices stores the set of logic operations.

2. The system of claim 1, wherein each of the plurality of system devices includes a respective local memory configured to store the set of logic operations.

3. The system of claim 1, wherein the system does not include a master controller.

4. The system of claim 1, wherein each of the plurality of system devices is configured to communicate events to all of the plurality of system devices.

5. The system of any one of claims 1-4, wherein each of the plurality of system devices is configured in association with a zone of the building.

6. The system of claim 1, wherein each of the plurality of system devices is configured to monitor its respective neighbor list.

7. The system of claim 6, wherein, a remaining subset of the plurality of system devices are configured to determine a failure of the mesh network caused by a dropped one (226) of the plurality of system devices.

8. The system of claim 7, wherein each of the remaining subset of the plurality of system devices is configured to provide a notification to the mobile device associated with the failure.

9. The system of claim 7, wherein the remaining subset are configured to form a new mesh (242, 244) network excluding the dropped one of the plurality of system devices.

10. The system of claim 8, wherein the remaining subset of the new mesh network is configured to operate according to a modified set of logic operations.

11. The system of claim 1, wherein the mobile device includes an interface (118) configured to receive inputs associated with managing the plurality of system devices.

12. A method, comprising:
forming a wireless mesh network (213) including a plurality of building automation system devices (213) installed in a building, wherein the plurality of system devices includes a plurality of input devices and a plurality of output devices;
operating the plurality of system devices according to a set of logic operations stored by each of the plurality of system devices; and
operating a remainder of the plurality of system devices according to a modified set of logic operations responsive to determining a failure of one (226) of the plurality of system devices.

13. The method of claim 12, wherein operating the plurality of system devices according to the set of logic operations includes:
determining an event using an input device of the plurality of input devices;
communicating an indication of the event to others of the plurality of system devices; and
activating an output device of the plurality of output devices responsive to the output device receiving the indication of the event.

14. The method of claim 12, wherein operating the plurality of system devices according to the set of logic operations includes:
determining an event using an input device of the plurality of input devices;
communicating an indication of the event to others of the plurality of system devices, wherein the indication includes an identification of a zone corresponding to the event; and
activating an output device of the plurality of output devices responsive to the output device receiving the indication of the event and determining that the output device is associated with the zone corresponding to the event.

15. The method of any one of claims 12-14, wherein the method includes operating the plurality of system devices according to the set of logic operations without a master controller.
